# EUROPÄISCHE PATENTANMELDUNG

(11) **EP 1 430 976 A1**
(43) Veröffentlichungstag der Anmeldung: **23.06.2004**
(21) Anmeldenummer: 02028828.8
(22) Anmeldetag: 21.12.2002
(51) Int. Cl.: B22F 1/00, H01M 4/24

(54) **Zinkpulver oder Zinklegierungspulver mit inhomogener Schüttdichte für alkalische Batterien**

(71) Anmelder: Grillo-Werke AG, D-47169 Duisburg (DE)
(72) Erfinder: Melzer, Armin, Dr., 46535 Dinslaken (DE); Merkel, Petra, 38667 Bad Harzburg (DE); Spriestersbach, Jochen, Dr., 47058 Duisburg (DE); Kube, Rudi, 38667 Bad Harzburg (DE); Schulz, Norbert, 38667 Bad Harzburg (DE)
(74) Vertreter: Sternagel, Fleischer, Godemeyer & Partner Patentanwälte

(57) **Zusammenfassung**

Die Erfindung betrifft Zinkpulver oder Zinklegierungspulver mit einer inhomogenen Schüttdichteverteilung in Abhängigkeit von der Partikelgröße, wobei die Differenz der Schüttdichte gemessen nach ASTM B212 bei dem Korngrößenanteil kleiner 75 µm gegenüber dem Korngrößenanteil größer 150 µm bei mindestens 0,5 g/cm³ liegt und die mittlere Schüttdichte des Pulvers gemessen nach ASTM B212 im Bereich von 1,8 bis 4,0 g/cm³ liegt. Ein weiterer Gegenstand der Erfindung sind Mischungen dieser Zinkpulver oder Zinklegierungspulver und eine alkalische Batterie, die diese Pulver enthält.

## Beschreibung

Gegenstand der Erfindung ist ein graduiertes Zinkpulver oder Zinklegierungspulver für alkalische Batterien mit einer inhomogenen Schüttdichteverteilung in Abhängigkeit zur Korngrößenverteilung, Mischungen von Zinkpulvern und Zinklegierungspulvern sowie eine alkalische Batterie, in der die erfindungsgemäßen Zinkpulver oder Zinklegierungspulver oder deren Mischungen als Elektrode eingesetzt werden.

Im Stand der Technik werden eine Vielzahl von verschieden legierten Zinkpulvern für den Einsatz in alkalischen Batterien beschrieben. Dabei werden die Zinkpulver in unterschiedlicher Weise legiert. Üblicherweise werden Zinkpulver eingesetzt, die frei von Quecksilber, Cadmium und möglichst auch frei von Blei sind. Derartige Zinkpulver haben den Nachteil, dass sie sich bei Einsatz in alkalischen Batterien aufgrund verschiedenerer Reaktionsprozesse unter Gasentwicklung allmählich zersetzen und so die Haltbarkeit, Lagerfähigkeit und auch die elektrischen Eigenschaften der Batterie negativ beeinflussen. Um dies zu verhindern hat man für Batteriezwecke meist Legierungen von Zinkpulver mit geringen Mengen anderer Metalle eingesetzt. Als Legierungselemente, die die Batteriegasung verringern, werden im Stand der Technik im wesentlichen Indium, Bismuth, Aluminium, Magnesium und Calcium aufgeführt. Das Ziel dieser Zulegierungen ist es, beim Einsatz in Batterien eine möglichst geringe Batteriegasung zu erhalten und damit die Lagerfähigkeit wie auch die Anwendungssicherheit der Batterien zu erhöhen.

Die technischen Anforderungen an Batterien haben sich in den letzten Jahren jedoch erheblich erhöht. Insbesondere durch eine erhebliche Zunahme von mobilen Geräten im Bereich der digitalen Kommunikations- und Unterhaltungselektronik, wie Digitalkameras, Mobiltelefonen, CD-Player, MP-3 Player, Laptops etc. sind die Anforderungen an Batterien und ihre elektrischen Leistungen erheblich gestiegen. Dies hat dazu geführt, dass man nunmehr versucht, die elektrischen Eigenschaften nicht mehr nur auf legierungstechnischem Wege zu verbessern, sondern auch durch Veränderung der Morphologie des Zinkpulvers oder der Zinkpulverlegierungen, wie zum Beispiel durch Änderungen der Pulververteilungen, Partikelformen und Schüttdichten des verwendeten Zinkpulvers oder Zinklegierungspulver. Üblicherweise werden heute gemäß dem Stand der Technik Zinkpulver oder Zinklegierungspulver verwendet, deren Teilchengröße in einem breiten Bereich von etwa 20 bis 500 µm liegt.

So beschreibt die WO 00/74157 A1 ein Gemisch aus Zinkpulver oder Zinklegierungspulver und einem flüssigen elektrolytischen Medium, wobei das Volumen des Mediums in etwa den Zwischenräumen zwischen den Teilchen bei trockener Schüttung entspricht. Diese Teilchen besitzen eine Schüttdichte die kleiner als 2,8 g/cm³ ist. Mit dieser Entwicklung soll erreicht werden, dass ein direkter Kontakt zwischen nahezu allen Teilchen besteht aber dennoch genügend flüssiges elektrolytisches Medium vorhanden ist, um die Metall und/oder Legierungsteilchen aufzulösen und dabei Strom zu erzeugen.

Die WO 01/03209 A1 beschreibt in ähnlicher Weise ein Gemisch aus Zink- oder Zinklegierungsteilchen und einem flüssigen elektrolytischen Medium, wobei hier die Schüttdichte noch geringer ist und bei etwa 2,3 g/cm³ liegt.

WO 99/07030 A1 beschreibt Zinkpulver oder Zinklegierungspulver für die Anwendung bei alkalischen Batterien, wobei dem Zink oder den Zinklegierungen unterschiedliche Mengen von feinsten Teilchen einer Größe von 200 mesh oder weniger (entsprechend ≤ 74 µm Partikeldurchmesser) zugemischt werden. Es wurde gefunden, dass diese Zumischung von feinen Zinkpartikeln zu besseren elektrischen Eigenschaften der Batterie führt, insbesondere zu einer Verbesserung der maximalen Entladungsrate. Diese definiert die Zeit, in der eine elektrische Spannung aus einer Batterie unter Belastung entnommen werden kann, ohne dass die Batteriespannung unter einen bestimmten Wert fällt. Diese Größe ist insbesondere wichtig für die Anwendung im Hochstrombereich, insbesondere bei Mobiltelefonen und anderen elektronischen Produkten. Diese messen üblicherweise die Batteriespannung und melden dem Benutzer wenn die Spannung bei Belastung abfällt, dass die Batterien ausgetauscht werden müssen. Dies tritt bei herkömmlichen Batterien auch auf, wenn die Batterie an sich noch ausreichend Kapazität hat, aber bei Belastung im Hochstrombereich bereits die Spannung abfällt. Diese Batterien werden dann aufgrund der Meldung des Gerätes trotz an sich noch ausreichend vorhandener Kapazität frühzeitig und unnötigerweise ausgetauscht.

In der EP 02 009 501.4, einer Anmeldung der Anmelderin des vorliegenden Erfindung wird zur Lösung dieses Problems ein Zinkpulver oder Zinklegierungspulver vorgeschlagen, bei dem 60 bis 100 Gew.-% der Teilchen des Zinkpulvers oder Zinklegierungspulvers einen Durchmesser von 40 bis 140 µm besitzen. Dieses Pulver besitzt bevorzugt eine relativ hohe Dichte mit Schüttdichten im Bereich von 2,9 bis 4,5 g/cm³ und weist günstige Gasungseigenschaften auf.

Die Anforderungen an Zinkpulver und Zinklegierungspulver für die Anwendung in elektrischen Batterien sind sehr unterschiedlich und es ist bis heute nicht gelungen, ein Zinkpulver oder ein Zinklegierungspulver zu entwickeln, das in allen Testverfahren eine Verbesserung erzielen konnte und insbesondere eine geringe Batteriegasung aufweist. Dies zeigt sich beispielsweise auch an der oben beschriebenen WO 99/07030. In den dort beschriebenen Beispielen wird die Batteriegasung der für Hochstromanwendungen geeigneten Zinkpulver und Zinklegierungspulver nicht untersucht und es ist davon auszugehen, dass die Batteriegasungseigenschaften nicht optimal sind.

Die technische Aufgabe der Erfindung war es daher, ein Zinkpulver oder ein Zinklegierungspulver zur Verfügung zu stellen, das für die Anwendung in alkalischen Batterien hervorragende elektrische Eigenschaften besitzt eine geringere Batteriegasung aufweist und insbesondere für Hochstromanwendungen geeignet ist.

Diese Aufgabe wird gelöst durch ein graduiertes Zinkpulver oder Zinklegierungspulver für alkalische Batterien, mit einer inhomogenen Schüttdichteverteilung in Abhängigkeit von der Partikelgröße, wobei die Differenz der Schüttdichte gemessen nach ASTM B212 bei dem Korngrößenanteil kleiner 75 µm gegenüber dem Korngrößenanteil größer 150 µm bei mindestens 0,5 g/cm³ , vorzugsweise bei 0,5 g/cm³ bis 2,0 g/cm³ liegt und die mittlere Schüttdichte des Pulvers gemessen nach ASTM B212 im Bereich von 1,8 bis 4,0 g/cm³ liegt.

Es wurde festgestellt, dass gerade die inhomogene Schüttdichteverteilung zu außerordentlich positiven Batterieeigenschaften führt. Die Batterieeigenschaften können durch deren Mischungen untereinander, aber auch mit Standardpulvern nochmals verbessert werden. Je größer die Inhomogenität der Zinkpulver, desto günstiger können die Batterieeigenschaften gerade im Hochstrombereich werden.

In einer bevorzugten Ausführungsform sind die Differenzen der Schüttdichten in Abhängigkeit von den Partikelgrößen wie folgt verteilt:
kleiner 75µm gegenüber kleiner 100 bis 75 µm mindestens 0,13 g/cm³, vorzugsweise 0,15 bis 0,5 g/cm³,
kleiner 100 bis 75µm gegenüber kleiner 150 bis 100 µm mindestens 0,13 g/cm³, vorzugsweise 0,15 bis 0,5 g/cm³.
kleiner 150 bis 100µm gegenüber 250 bis 150 µm mindestens 0,13 g/cm³, vorzugsweise 0,15 bis 0,5 g/cm³.

Die Partikelgröße der Teilchen bezogen auf das Zinkpulver oder Zinklegierungspulver kann hierbei bei 20 bis 1000 µm liegen.

Es ist weiterhin bevorzugt, dass die Teilchen eines Durchmessers bis 75 µm des Zinkpulvers oder Zinklegierungspulvers eine rundere Kornform aufweisen und mit zunehmender Partikelgröße nadelig bzw. plättchenförmig sind.

Als Korngrößenverteilung im Sinne der Erfindung wird die Verteilung der Teilchengröße im Zinkpulver oder Zinklegierungspulver verstanden, wobei die Größe der Teilchen als Durchmesser in µm angegeben wird. Die Korngrößenverteilung wurde nach ASTM B 214 ermittelt. Unter Schüttdichte im Sinne der Erfindung wird der Quotient aus Masse und eingenommenem Volumen, das Zwischenräume und falls zusätzlich Hohlräume vorhanden sind, auch diese einschließt, verstanden. Diese Schüttdichte wird gemessen nach ASTM B 212

Soweit in der Beschreibung von Zinkpulver oder Zinklegierungspulver gesprochen wird, sind Zinksorten gemeint, die bezüglich ihrer Reinheit für Batterieanwendungen gemäß dem Stand der Technik geeignet sind. Übliche verwendete Zinksorten besitzen eine Reinheit von 99,99 Gew.-%, 99,995 Gew.-% oder 99,999 Gew.-%. Legierungsangaben, die in der Beschreibung gemacht werden, beziehen sich auf den Anteil an zulegierten Elementen, also nicht auf eventuell im Zinkpulver vorhandene Verunreinigungen. Die Mengenangaben bei den Zinklegierungen sind so zu verstehen, dass die jeweilige Menge an Legierungselement zulegiert wird und der Rest Zink ist.

Das erfindungsgemäße Zinkpulver oder Zinklegierungspulver besitzt eine spezifische Korngrößenverteilung, wobei sich die Schüttdichte mit der Korngröße stark verändert. Es verfügt über hervorragende elektrische Eigenschaften, insbesondere bei der Anwendung in alkalischen Batterien. Die Batteriegasung ist im Vergleich zu herkömmlichen Zinkpulvern des Standes der Technik niedriger. Daraus resultiert eine erheblich längere Haltbarkeit und Lagerfähigkeit von alkalischen Batterien, in denen die erfindungsgemäßen Zinkpulver oder Zinklegierungspulver eingesetzt werden.

Das Zinkpulver unterliegt legierungstechnisch keinerlei Einschränkungen und so können die für Zinkpulver üblichen Legierungselemente Indium, Bismuth, Blei, Aluminium, Calcium, Lithium und Magnesium oder Gemische derselben als Legierungselemente eingesetzt werden. In bevorzugter Weise sind ein oder mehrere Legierungselemente in folgenden Mengen enthalten: Indium 0,1 bis 1200 ppm, Bismuth 0,1 bis 1000 ppm, Blei 0,1 bis 1000 ppm, Aluminium 0,1 bis 200 ppm, Calcium 0,1 bis 200 ppm, Magnesium 0,1 bis 200 ppm, sowie Alkalimetalle, wie Natrium 0,1 bis 200 ppm und/oder Lithium 0,1 bis 200 ppm

Besonders bevorzugt sind die folgenden Legierungen: 0,1 bis 1200 ppm Indium, vorzugsweise 100 bis 850 ppm Indium und 0,1 bis 1000 ppm Bismuth, vorzugsweise 50 bis 500 ppm Bismuth.

Weiterhin bevorzugt ist die Legierung mit 0,1 bis 1200 ppm Indium, vorzugsweise 100 bis 500 ppm Indium und 0,1 bis 1000 ppm Bismuth, vorzugsweise 50 bis 500 ppm Bismuth und 0,1 bis 1000 ppm Blei, vorzugsweise 400 bis 600 ppm Blei.

Weiterhin besonders bevorzugt ist die Legierung mit 0,1 bis 1000 ppm Blei, vorzugsweise 400 bis 600 ppm Blei und 0,1 bis 1000 ppm Indium, vorzugsweise 100 bis 850 ppm Indium.

Als weitere Legierung ist eine Legierung bevorzugt, die 0,1 bis 1000 ppm Blei, insbesondere 400 bis 600 ppm Blei enthält.

Bei diesen Legierungsangaben ist der Rest Zink.

Untersuchungen haben gezeigt, dass die Zulegierung dieser obengenannten Elemente keinerlei Nachteile bezüglich der elektrischen Eigenschaften oder der Batteriegasungseigenschaften verursacht. Das erfindungsgemäße Zinkpulver kann sogar als bleifreies Pulver für alle Anwendungen und Batterietypen verwendet werden. Batterieversuche mit dem Zinkpulver oder Zinklegierungspulver auch ohne Verwendung von Blei als Legierungselement haben gezeigt, dass insbesondere in den alkalischen Rundzellentypen die Gasung extrem niedrig ist und dies ebenso zutrifft für Zelltypen der Größen C und D der internationalen Klassifikation.

Je nach unterschiedlicher mittlerer Schüttdichte sind drei verschiedene Zinkpulver oder Zinkpulverlegierungen besonders bevorzugte Ausführungsformen der Erfindung. Ein Zinkpulver oder Zinklegierungspulver mit einer mittleren Schüttdichte von 1,8 bis 2,2 g/cm³, vorzugsweise 1,9 bis 2,1 g/cm³ und ganz besonders bevorzugt 2,0 g/cm³. Dieses wird nachfolgend als LD-Pulver (low density) bezeichnet. Dieses Zinkpulver oder Zinklegierungspulver des Typs LD besitzt in bevorzugter Weise die nachfolgende Schüttdichteverteilung in Abhängigkeit der Korngrößenbereiche (Tabelle A) und die nachfolgende Siebverteilung (Tabelle B):

**Tabelle A**

| **Korngrößenbereich [µm]** | **Schüttdichtebereich [g/cm**^{**3**}**]** |
|---|---|
| < 250 bis 150 | 1,86 bis 1,24 |
| < 150 bis 100 | 2,12 bis 1,42 |
| < 100 bis 75 | 2,32 bis 1,54 |
| < 75 | 2,82 bis 1,88 |

**Tabelle B**

| **Korngrößenbereich [µm]** | **Menge [Gew.-%]** |
|---|---|
| ≥ 400 | 0 |
| < 400 bis 250 | 1,2 bis 0,8 |
| < 250 bis 150 | 15,6 bis 10,4 |
| < 150 bis 100 | 44,4 bis 29,6 |
| < 100 bis 75 | 20,4 bis 13,6 |
| < 75 bis 40 | 31,2 bis 20,8 |
| < 40 | 7,2 bis 4,8 |

Eine weitere besondere Ausführungsform der Erfindung ist ein Zinkpulver oder eine Zinkpulverlegierung mit einer mittleren Schüttdichte von 2,5 bis 2,9 g/cm³, vorzugsweise von 2,6 bis 2,8 g/cm³ und ganz besonders bevorzugt von 2,7 g/cm³. Dieses wird nachfolgend als MD Pulver (middle density) bezeichnet. Dieses Zinkpulver oder Zinklegierungspulver des Typs MD besitzt in bevorzugter Weise die nachfolgende Schüttdichteverteilung in Abhängigkeit der Korngrößenbereiche (Tabelle C) und die nachfolgende Siebverteilung (Tabelle D):

**Tabelle C**

| **Korngrößenbereich [µm]** | **Schüttdichtebereich [g/cm**^{**3**}**]** |
|---|---|
| < 250 bis 150 | 2,47 bis 1,65 |
| < 150 bis 100 | 2,78 bis 1,86 |
| < 100 bis 75 | 3,34 bis 2,22 |
| < 75 | 4,02 bis 2,68 |

**Tabelle D**

| **Korngrößenbereich [µm]** | **Menge [Gew.-%]** |
|---|---|
| ≥ 400 | 0 |
| < 400 bis 250 | 1,2 bis 0,8 |
| < 250 bis 150 | 39,6 bis 26,4 |
| < 150 bis 100 | 31,2 bis 20,8 |
| < 100 bis 75 | 12,0 bis 8,0 |
| < 75 bis 40 | 24,0 bis 16,0 |
| < 40 | 12,0 bis 8,0 |

Eine dritte besondere Ausführungsform der Erfindung ist ein Zinkpulver oder Zinklegierungspulver mit einer hohen Schüttdichte von 3,0 bis 3,4 g/cm³, vorzugsweise von 3,1 bis 3,3 g/cm³ und ganz besonders bevorzugt von 3,2 g/cm³. Dieses wird nachfolgend als HD Pulver (high density) bezeichnet. Dieses Zinkpulver oder Zinklegierungspulver des Typs HD besitzt in bevorzugter Weise die nachfolgende Schüttdichteverteilung in Abhängigkeit der Korngrößenbereiche (Tabelle E) und die nachfolgende Siebverteilung (Tabelle F):

**Tabelle E**

| **Korngrößenbereich [µm]** | **Schüttdichtebereich [g/cm**^{**3**}**]** |
|---|---|
| < 250 bis 150 | 2,96 bis 1,98 |
| < 150 bis 100 | 3,37 bis 2,25 |
| < 100 bis 75 | 3,67 bis 2,45 |
| < 75 | 4,01 bis 2,67 |

**Tabelle F**

| **Korngrößenbereich [µm]** | **Menge [Gew.-%]** |
|---|---|
| ≥ 400 | 0 |
| < 400 bis 250 | 1,2 bis 0,8 |
| < 250 bis 150 | 12,0 bis 8,0 |
| < 150 bis 100 | 30,0 bis 20,0 |
| < 100 bis 75 | 27,6 bis 18,4 |
| < 75 bis 40 | 42,0 bis 28 |
| < 40 | 7,2 bis 4,8 |

Die nachfolgenden Figuren sollen die Erfindung näher erläutern. Es werden elektronenmikroskopische Aufnahmen der erfindungsgemäßen Zinkpulver der Typen LD, MD und HD gezeigt mit der Morphologie der gesamten Verteilung und spezifischen Korngrößen der Fraktion < 75µm und > 150 µm.

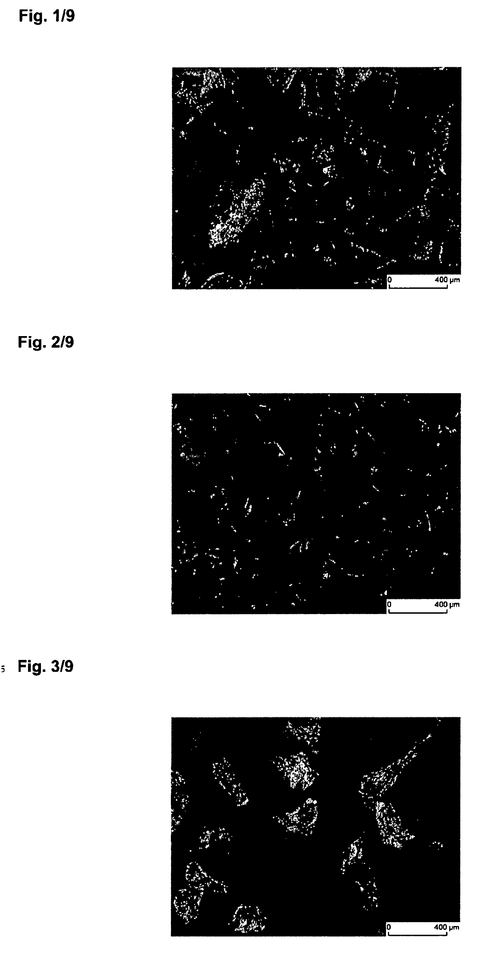

In **Figur 1** ist das erfindungsgemäße Zinkpulver Typ LD (geringe Schüttdichte 2,0 g/cm³) beispielhaft in der gesamten Verteilung dargestellt, ohne Bezug zur reellen quantitativen Verteilung.

In **Figur 2** ist die Fraktion < 75 µm des Typs LD dargestellt, ohne Bezug zur reellen quantitativen Verteilung. Diese zeichnet sich durch eine relativ runde Partikelform aus, die jedoch länglicher ist als bei Typ MD.

In **Figur 3** ist die Fraktion > 150 µm des Typs LD dargestellt, ohne Bezug zur reellen quantitativen Verteilung. Diese zeichnet sich durch eine sehr plättchenartige Partikelform aus.

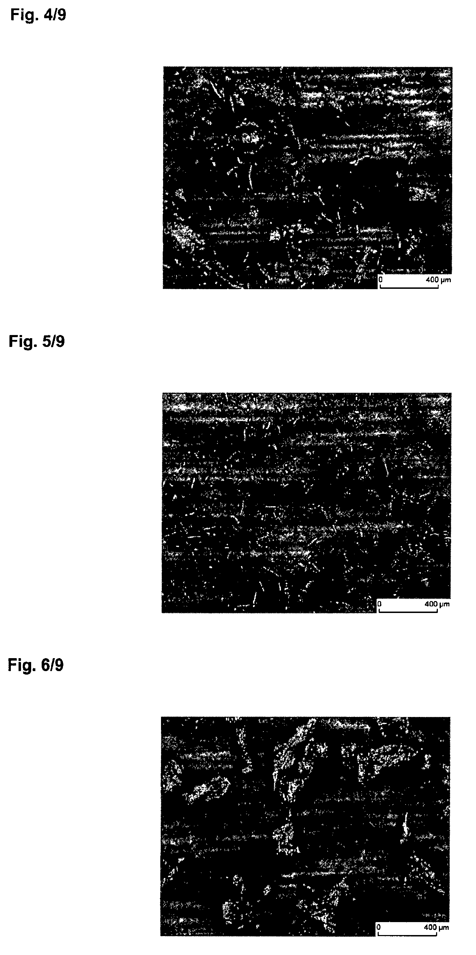

In **Figur 4** ist das erfindungsgemäße Zinkpulver Typ MD (mittlere Schüttdichte 2,7 g/cm³) beispielhaft in der gesamten Verteilung dargestellt, ohne Bezug zur reellen quantitativen Verteilung.

In **Figur 5** ist die Fraktion < 75 µm des Typs MD dargestellt, ohne Bezug zur reellen quantitativen Verteilung, Diese zeichnet sich durch eine relativ runde Partikelform aus.

In **Figur 6** ist die Fraktion > 150 µm des Typs MD dargestellt, ohne Bezug zur reellen quantitativen Verteilung. Diese zeigt eine sehr nadelige und plättchenförmige Partikelform.

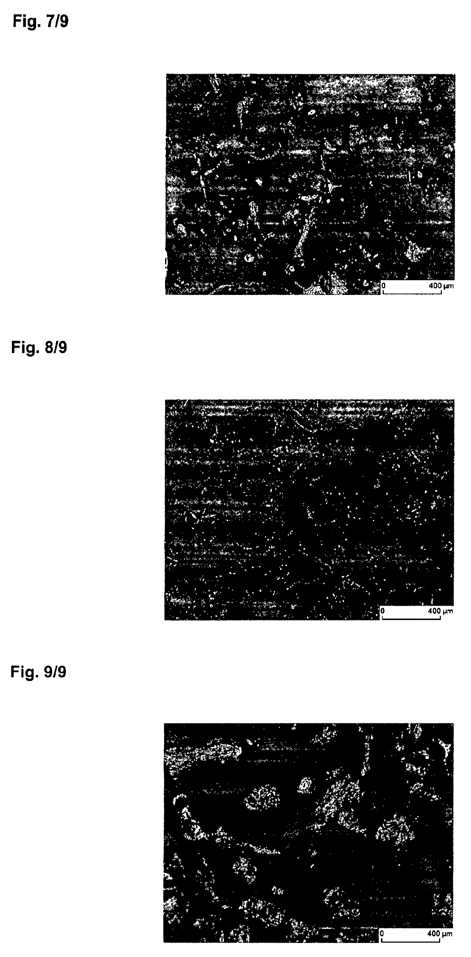

In **Figur 7** ist das erfindungsgemäße Zinkpulver des Typs HD (mittlere Schüttdichte 3,2 g/cm³) beispielhaft in der gesamten Verteilung dargestellt, ohne Bezug zur reellen quantitativen Verteilung.

In **Figur 8** ist die Fraktion < 75 µm des Typs HD dargestellt, ohne Bezug zur reellen quantitativen Verteilung. Sie zeichnet sich durch eine relativ runde Partikelform aus.

In **Figur 9** ist die Fraktion > 150 µm des Typs HD dargestellt, ohne Bezug zur reellen quantitativen Verteilung. sie besitzt eine sehr nadelige und deutlich plättchenförmigere Partikelform.

In einer bevorzugten Ausführungsform ist es weiterhin möglich, die erfindungsgemäßen Zinkpulver oder Zinklegierungspulver, insbesonder die oben erwähnten Pulver der Typen LD, MD und HD mit anderen herkömmlichen Zinkpulvern oder Zinklegierungspulver des Standes der Technik oder auch untereinander zu kombinieren und so Mischungen wie zum Beispiel Doppelverteilungen zu erstellen.

Eine bevorzugte Ausführungsform sind daher Mischungen von Zinkpulver oder Zinklegierungspulver enthaltend herkömmliche Zinkpulver oder Zinklegierungspulver des Standes der Technik mit einer Schüttdichte von 2,8 bis 3,0 g/cm³ im Gemisch mit dem Pulver der Typen LD, MD oder HD. Dabei ist die Zumischung des Pulvers vom Typ LD besonders bevorzugt. In bevorzugter Weise werden mindestens 5Gew.-%, vorzugsweise 10 bis 80 Gew.-% zugemischt.

Diese Doppelverteilungen führen zu sehr guten Hochstromeigenschaften in der Batterie. Dabei sollte das zweite Zinkpulver eine Korngrößenverteilung aufweisen, wie es bei für Batterien gängigen Pulvern oder Zinklegierungspulvern der Fall ist. Üblicherweise werden heute gemäß dem Stand der Technik Zinkpulver oder Zinklegierungspulver verwendet, deren Teilchengröße in einem breiten Bereich von etwa 20 bis 500 µm liegt. In bevorzugter Weise sollte diese Korngrößenverteilung gemessen nach ASTM 214 in einem Bereich von 75 bis 500 µm liegen sein. Eine positive Wirkung in den Batterieeigenschaften bei Einsatz des erfindungsgemäßen Zinkpulvers kann bereits bei Zugabe von 5 Gew.-% eindeutig nachgewiesen werden. Es besteht keinerlei Einschränkung in den Mischungsverhältnissen dieser Zinkpulver oder Zinklegierungspulver. Das Mischungsverhältnis kann in Abhängigkeit zu den erwünschten Batterieeigenschaften gezielt eingestellt werden.

Besonders bevorzugt sind auch Mischungen der erfindungsgemäßen Zinkpulver oder Zinklegierungspulver untereinander mit verschiedener mittlerer Schüttdichte. Hierbei besteht die Möglichkeit über die Anteile der jeweiligen Pulver die mittlere Schüttdichte kontrolliert einzustellen.

So können Gemische der Typen LD, MD und HD mit unterschiedlicher Schüttdichte untereinander verwendet werden, wobei immer das Pulver mit der niedrigeren Schüttdichte zugemischt wird. So kann beispielsweise zu HD Pulver LD Pulver zugemischt werden in Mengen von mindestens 5 Gew.-%, vorzugsweise 10 bis 80 Gew.-%. Es ist aber auch möglich MD Pulver mit LD Pulver zu mischen, wobei auch hier das LD Pulver in Mengen von mindestens 5 Gew.-%, vorzugsweise 10 bis 80 Gew.-% zugemischt wird. Weiterhin bevorzugt ist eine Mischung von HD Pulver mit MD Pulver, wobei dann das MD Pulver zugemischt wird, ebenfalls in Mengen von mindestens 5 Gew.-%, vorzugsweise 10 bis 80 Gew.-%.

Das Zinkpulver oder Zinklegierungspulver oder die Mischungen davon sind geeignet für die Anwendung in allen alkalischen Rundzellen des internationalen Typs AAAA, AAA, AA, C, D etc. sowie für alle Typen von Knopfzellen, in denen Zinkpulver oder Zinklegierungspulver eingesetzt werden. Hierzu gehören zum Beispiel Zink-Luft-Knopfzellen, Alkali-Mangan-Knopfzellen und Zink-Silberoxid-Knopfzellen. Bei der Anwendung in Knopfzellen wird häufig noch amalgamiertes Zinkpulver eingesetzt, das Quecksilber in Mengen von etwa 0,15 bis 6 Gew.-% enthält. Falls diese Amalgamierung gewünscht wird, kann das erfindungsgemäße Zinkpulver oder Zinklegierungspulver einer zusätzlichen Oberflächenamalgamierung unterzogen werden. Es kann jedoch aufgrund seiner geringen Gasung auch ohne Quecksilberzusatz eingesetzt werden, wobei dann der Quecksilbergehalt unter 1 ppm liegt.

Die Herstellung des erfindungsgemäßen Zinkpulvers oder Zinklegierungspulvers erfolgt in an sich bekannter Weise. Die Teilchen aus Zink oder Zinklegierungen werden nach verschiedenen Methoden aus flüssigem Zink oder flüssigen Zinklegierungen hergestellt. Beispielsweise erfolgt ein Verdüsen oder Granulieren auf einem rotierenden Granulierteller, wobei sich je nach Verfahrensbedingungen Korngrößen, Korngrößenverteilungen und die äußere Form der Teilchen einstellen lässt. Eine spezielle Schutzgaskammer ist hierbei nicht unbedingt erforderlich. Wenn bestimmte Korngrößenverteilungen gewünscht werden, können auch entsprechende Siebfraktionen erstellt werden, die die einzelnen Teilchen mit der jeweiligen Korngrößenverteilung enthalten. Diese können dann in der gewünschten Korngrößenverteilung und Schüttdichte wieder gemischt werden. Häufig werden auch Siebfraktionen von Überkorn und Unterkorn abgetrennt.

In bevorzugter Weise wird das erfindungsgemäße Zinkpulver oder Zinklegierungspulver oder Mischungen davon in einer alkalischen Zelle verwendet. Derartige alkalische Zellen sind im Stand der Technik bekannt und werden beispielsweise in der WO 99/07030 beschrieben. Diese alkalischen Zellen besitzen üblicherweise eine Anode aus Zinkpulver oder Zinklegierungspulver und Kathoden aus Mangandioxid oder auch anderen Materialien wie Luft oder Silberoxid. Für die Anode wird das alkalische Zinklegierungspulver in einer Elektrolytflüssigkeit mit bekannten Geliermitteln oder anderen Zusätzen verfestigt, um das teilchenförmige Zink oder die teilchenförmige Zinklegierung zu stabilisieren und eine möglichst ideale Verteilung innerhalb der Elektrode zu erhalten.

Das erfindungsgemäße Zinkpulver oder Zinklegierungspulver besitzt einen günstigen Korngrößenbereich und eine günstige Schüttdichteverteilung in Abhängigkeit von der Korngröße und kann für Batterien in allen alkalischen Rundzellen und Knopfzellen eingesetzt werden. Weiterhin wird durch das erfindungsgemäße Zinkpulver oder Zinklegierungspulver erreicht, dass auch ohne den Zusatz von Blei, Cadmium und Quecksilber als Legierungselemente eine geringe Batteriegasung erzielt wird und somit ein Pulver geschaffen wird, das universell in allen alkalischen Batterietypen einsetzbar ist.

Die nachfolgenden Beispiele sollen die Erfindung näher erläutern:

### Beispiele

Es wurden Zinkpulver mit verschiedenen Legierungsbestandteilen hergestellt gemäß den in der Beschreibung erwähnten Verfahren. Hierbei wurden drei unterschiedliche mittlere Schüttdichten verfahrenstechnisch eingestellt. Ferner wurden die erfinderischen Zinkpulver mit Standard Zinkpulvern in unterschiedlichen Mischungsverhältnissen eingesetzt. Natürlich sind auch dazwischenliegende mittlere Schüttdichten problemlos herstellbar und je nach Anwendung bestens geeignet.
1. Typ 1: LD (low density) mit einer mittleren Schüttdichte von ca.2,0 g/cm³
2. Typ 2: MD (medium density) mit einer mittleren Schüttdichte von ca. 2,7 g/cm³
3. Typ 3: HD (higher density) mit einer mittleren Schüttdichte von ca. 3,2 g/cm³

Es wurden Batterieversuche mit LR6 (AA) und LR14 (C)-Zellen durchgeführt. Hierbei wurden auch Gemische der neuartigen Zinkpulvertypen mit Standard Zinkpulvern hergestellt und getestet. Die Zellen zeigten in allen Fällen hervorragende Batterieeigenschaften im Vergleich zu Standardzinkpulvern und die Batteriegasung war in allen Fällen deutlich geringer. Die Gasung wurde ermittelt ebenfalls in LR 14 (C)-Zellen nach einer An-Entladung von 40 und 270 min bei 2 Ohm und anschließender Lagerung der Batterien von 7 Tagen bei 70 °C. Die Gasung lag hierbei in allen Fällen bei Werten von unter 4 ml Gas/Zelle. Besonders auffällig sind die sehr niedrigen Gasungswerte bei der 40 Minuten Entladung, die ebenfalls unter 4 ml pro Zelle lagen. Lediglich das LD-Pulver allein zeigt keine Verbesserungen, es weist jedoch in Kombination mit Standardzinkpulvern sehr gute Entladungseigenschaften auf. Im Gegensatz zum Standardpulver erzielt man eine Verbesserung um einen Faktor von bis zu 20.

Ferner wurde eine Standard Gasung (Out of cell gas Test) durchgeführt. Hierbei werden 25 g Zinkpulver in einem Glaskolben mit 135 ml 36%-iger KOH und 4 % ZnO angesetzt. Die Wasserstoffentwicklung wird nach einem Tag bei 45°C ermittelt. Hier lagen die Gasungswerte des erfindungsgemäßen Pulvers im Bereich des Standardzinkpulvers, aber deutlich niedriger als bei dem feinen Standardzinkpulver. Die Fließrate wurde nach ASTM B213 ( 50 g 1/10" No.1-2288) gemessen.

Tabelle 1 zeigt die Partikelgrößeverteilung, die Schüttdichte von zwei spezifischen Siebfraktionen, die mittlere Schüttdichte und die Ergebnisse der Gasungsversuche bei erfindungsgemäßen verschiedenen Zinklegierungspulvern und bei Standardlegierungspulvern.

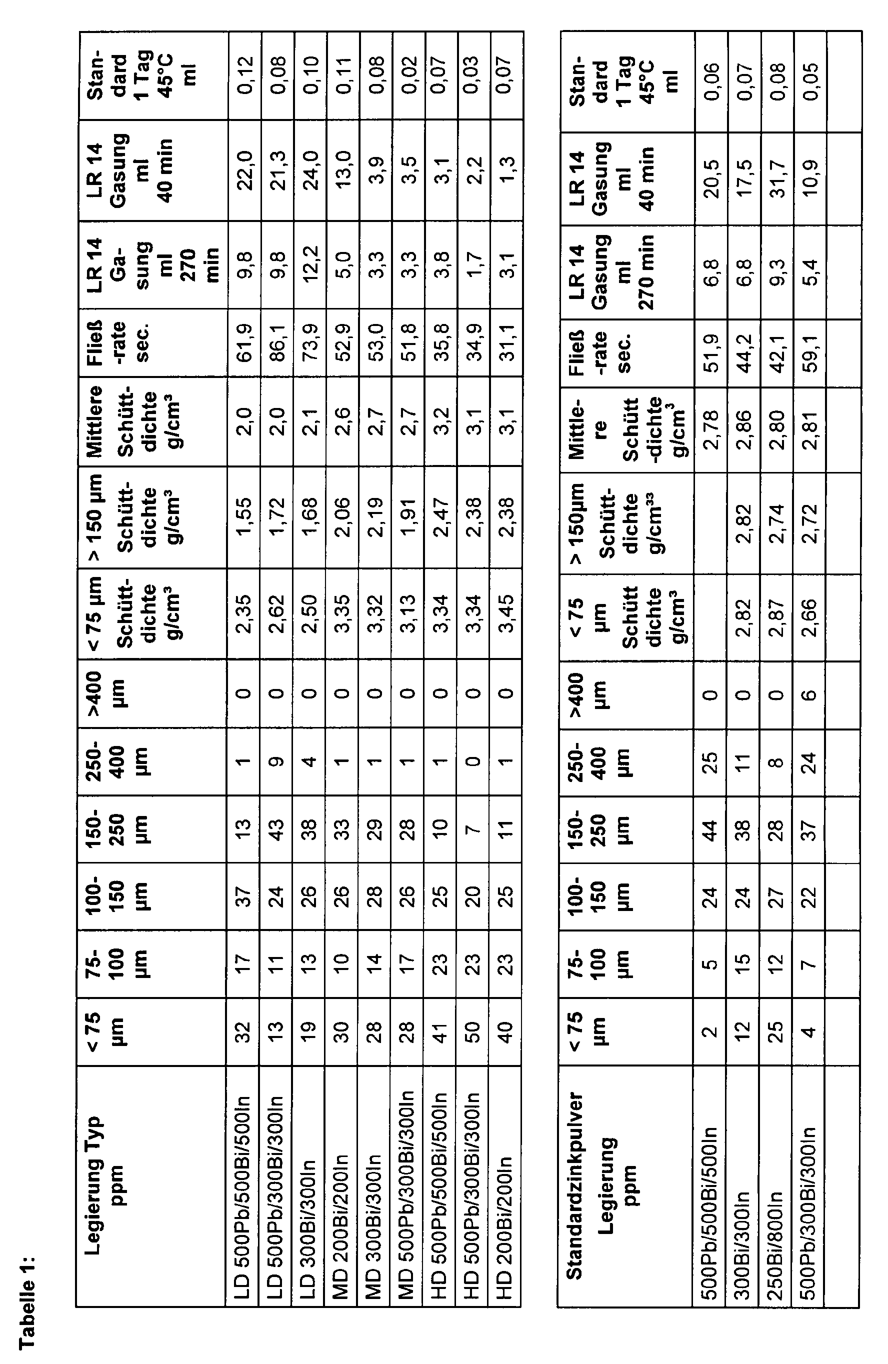

Tabelle 2 zeigt die Siebverteilung in Gew.-% der erfindungsgemäßen Zinkpulver des Typs LD, MD und HD im Vergleich zu Standardzinkpulvern. Die Korngrößen sind in µm angegeben. Man erkennt, dass die erfindungsgemäßen Zinkpulver gegenüber den Standardzinkpulvern eine völlig andere Siebverteilung besitzen. Auffällig ist, dass insbesondere die Korngröße im Bereich von 75 bis 40 µm bei den erfindungsgemäßen Zinkpulvern in größerer Menge vorhanden ist als bei den Standardzinkpulvern. Umgekehrt verhält es sich für die Korngrößen der Bereiche 250 bis 150 µm, die in den Standardzinkpulvern in größerer Menge vorkommen.

**Tabelle 2:**

| **Siebverteilung** | | | | | |
|---|---|---|---|---|---|
| **Teilchengröße [µm]** | **Pulver LD (mittlere Schüttdichte 2,0 g/cm**^{**3**}**) Siebfraktion [Gew.-%]** | **Pulver MD (mittlere Schüttdichte 2,7 g/cm**^{**3**}**) Siebfraktion [Gew.-%]** | **Pulver HD (mittlere Schüttdichte 3,2 g/cm**^{**3**}**) Siebfraktion[Gew.-%]** | **Standard zinkpulver 1 Siebfraktion [Gew.-%]** | **Standardzinkpulver 2 Siebfraktion [Gew.-%]** |
| >400 | 0 | 0 | 0 | 0 | 0 |
| 400-250 | 1 | 1 | 1 | 8 | 11 |
| 250-150 | 13 | 33 | 10 | 28 | 38 |
| 150-100 | 37 | 26 | 25 | 27 | 24 |
| 100-75 | 17 | 10 | 23 | 12 | 15 |
| 75-40 | 26 | 20 | 35 | 21 | 12 |
| <40 | 6 | 10 | 6 | 4 | 0 |

Tabelle 3 zeigt die Schüttdichtenverteilung in Abhängigkeit von der Korngröße bei Zinkpulvern des Typs LD, MD und HD im Vergleich zu Standardzinkpulvern. Es fällt auf das die Schüttdichtenverteilung über die verschiedenen Korngrößenbereiche bei den erfindungsgemäßen Zinkpulvern sehr inhomogen ist und zu höheren Korngrößen stark abnimmt. Dagegen sind die vergleichbaren Schüttdichten bei den Standardzinkpulvern in allen Korngrößenbereichen relativ homogen.

**Tabelle 3:**

| **Schüttdichte in g/cm**^{**3**} | | | | | |
|---|---|---|---|---|---|
| **Teilchengröße [µm]** | **Pulver LD (mittlere Schüttdichte 2,0 g/cm**^{**3**}**)** **Schüttdichte [g/cm**^{**3**}**]** | **Pulver MD (mittlere Schüttdichte 2,7 g/cm**^{**3**}**)** **Schüttdichte [g/cm**^{**3**}**]** | **Pulver HD (mittlere Schüttdichte 3,2 g/cm**^{**3**}**)** **Schüttdichte [g/cm**^{**3**}**]** | **Standardzinkpulver 1 Schüttdichte [g/cm**^{**3**}**]** | **Standardzinkpulver 2 Schüttdichte [g/cm**^{**3**}**]** |
| >400 | - | - | - | - | - |
| 400-250 | - | - | - | 2,73 | 2,87 |
| 250-150 | 1,55 | 2,06 | 2,47 | 2,74 | 2,82 |
| 150-100 | 1,77 | 2,32 | 2,81 | 2,81 | 2,89 |
| 100-75 | 1,93 | 2,78 | 3,06 | 2,84 | 2,89 |
| < 75 | 2,35 | 3,35 | 3,34 | 2,87 | 2,82 |

### Untersuchung der Entladeergebnisse an LR 6 Zellen

Es wurden an LR6 Zellen Entladungsuntersuchungen nach Standard ANSI Digital Camera und ANSI Photo Flash durchgeführt, wobei als Vergleichszinkpulver ein herkömmliches Standardpulver verwendet wurde.
Test 1: ANSI Digital Camera 1000 mA kontinuierliche. Entladeschlussspannung 1,0V. Das Entladeergebnis bei herkömmlichem Standardpulver wird auf 100 % gesetzt. Die angegebene Prozentzahl gibt die Kapazität des gemessenen Pulvers in Prozent an.
Test 2: ANSI Photo Flash 1000 mA 10s/min 1 h/d Entladeschlussspannung 0,9V. Hierbei bezieht sich die Prozentzahl auf die ermittelten Entladezyklen, da es sich nicht um eine kontinuierliche Entladung wie in Test 1 handelt.

Tabelle 4 zeigt die Entladeergebnisse. Es ist zu erkennen, dass die Entladeergebnisse bei Mischungen der erfindungsgemäßen Zinklegierungspulver untereinander oder mit Standardzinklegierungspulvern zwei bis dreifach besser sind. Dies zeigt, dass die erfindungsgemäßen Zinklegierungspulver und Mischungen, die diese enthalten, hervorragend zur Anwendung in alkalischen Zellen geeignet sind und insbesondere sehr gute Hochstromeigenschaften besitzen.

**Tabelle 4:**

| **Entladungsergebnisse LR 6** | | | |
|---|---|---|---|
| **Legierung** **[ppm]** | **Schüttdichte [g/cm**^{**3**}**]** | **Test 1** **[%]** | **Test 2** **[%]** |
| 500Pb/500Bi/500In (Standard) | 2,8 | 100 | 100 |
| HD 500Pb/500Bi/500In | 3,2 | 103 | 102 |
| 500Pb/500Bi/500In (Standard) + 10% LD 500Pb/500Bi/500In | 2,7 | 118 | 174 |
| 500Pb/500Bi/500In (Standard) + 50% LD 500Pb/500Bi/500In | 2,4 | 126 | 322 |
| 500Pb/500Bi/500In (Standard) + 70% LD 500Pb/500Bi/500In | 2,2 | 132 | 338 |
| HD 500Pb/500Bi/500In + 10% LD 500Pb/500Bi/500In | 2,9 | 132 | 252 |
| HD 500Pb/500Bi/500In + 20% LD 500Pb/500Bi/500In | 2,7 | 136 | 295 |
| HD 500Pb/500Bi/500In + 50% LD 500Pb/500Bi/500In | 2,3 | 142 | 303 |
| 300 Bi/300In (Standard) | 2,9 | 100 | 100 |
| HD 300Bi/300In | 3,1 | 105 | 159 |
| MD 300Bi/300In | 2,7 | 107 | 161 |
| 300 Bi/300In (Standard) + 20% LD 300Bi/300In | 2,8 | 110 | 159 |
| HD 300Bi/300In + 20% LD 300Bi/300In | 2,9 | 110 | 204 |
| 200Bi/200In/80Al (Standard) | 2,7 | 100 | 100 |
| 200Bi/200In/80Al (Standard) + 20% LD 300Bi/300In | 2,7 | 105 | 136 |

## Patentansprüche

1. Zinkpulver oder Zinklegierungspulver mit einer inhomogenen Schüttdichteverteilung in Abhängigkeit von der Partikelgröße, wobei die Differenz der Schüttdichte gemessen nach ASTM B212 bei dem Korngrößenanteil kleiner 75 µm gegenüber dem Korngrößenanteil größer 150 µm bei mindestens 0,5 g/cm³ liegt und die mittlere Schüttdichte des Pulvers gemessen nach ASTM B212 im Bereich von 1,8 bis 4,0 g/cm³ liegt.

2. Zinkpulver oder Zinklegierungspulver nach Anspruch 1, **dadurch gekennzeichnet, dass** die Differenz der Schüttdichte bei dem Korngrößenanteil kleiner 75 µm gegenüber dem Korngrößenanteil größer 150 µm 0,5 g/cm³ bis 2,0 g/cm³ ist.

3. Zinkpulver oder Zinklegierungspulver nach einem oder mehreren der Ansprüche 1 bis 3, **dadurch gekennzeichnet, dass** die Differenzen der Schüttdichten in Abhängigkeit der Partikelgrößen wie folgt verteilt sind:
kleiner 75µm gegenüber kleiner 100 bis 75 µm mindestens 0,13 g/cm³
kleiner 100 bis 75µm gegenüber kleiner 150 bis 100 µm mindestens 0,13 g/cm³
kleiner 150 bis 100µm gegenüber 250 bis 150 µm mindestens 0,13 g/cm³

4. Zinkpulver oder Zinklegierungspulver nach Anspruch 3, **dadurch gekennzeichnet, dass** die Differenzen der Schüttdichten in Abhängigkeit der Partikelgrößen wie folgt verteilt sind:
<75 µm gegenüber <100 bis 75 µm 0,15 bis 0,5 g/cm³
<100 bis 75 µm gegenüber <150 bis 100 µm mindestens 0,15 bis 0,5 g/cm³
<150 bis 100 µm gegenüber 250 bis 150 µm mindestens 0,15 bis 0,5 g/cm³

5. Zinkpulver oder Zinklegierungspulver nach einem oder mehreren der Ansprüche 1 bis 4, **dadurch gekennzeichnet, dass** als Legierungselemente Metalle ausgewählt aus der Gruppe Indium, Bismuth, Blei, Aluminium, Calcium, Lithium, Natrium, Magnesium oder Gemische derselben enthalten sind.

6. Zinkpulver oder Zinklegierungspulver nach Anspruch 5, **dadurch gekennzeichnet, dass** ein oder mehrere Legierungselemente ausgewählt aus der nachfolgenden Gruppe von Metallen in folgenden Mengen enthalten sein können: 0,1 bis 1200 ppm Indium, 0,1 bis 1000 ppm Bismuth, 0,1 bis 1000 ppm Blei, 0,1 bis 200 ppm Aluminium, 0,1 bis 200 ppm Calcium, 0,1 bis 200 ppm Lithium, 0,1 bis 200 ppm Natrium, 0,1 bis 200 ppm Magnesium.

7. Zinkpulver oder Zinklegierungspulver nach Anspruch 5, **dadurch gekennzeichnet, dass** es 0,1 bis 1200 ppm Indium und 0,1 bis 1000 ppm Bismuth enthält.

8. Zinkpulver oder Zinklegierungspulver nach Anspruch 5, **dadurch gekennzeichnet, dass** es 0,1 bis 1200 ppm Indium, 0,1 bis 1000 ppm Bismuth und 0,1 bis 1000 ppm Blei enthält.

9. Zinkpulver oder Zinklegierungspulver nach Anspruch 5, **dadurch gekennzeichnet, dass** es 0,1 bis 1000 ppm Blei und 0,1 bis 1000 ppm Indium oder Bismuth enthält.

10. Zinkpulver oder Zinklegierungspulver nach Anspruch 5, **dadurch gekennzeichnet, dass** es 0,1 bis 1000 ppm Blei enthält.

11. Zinkpulver oder Zinklegierungspulver nach Anspruch 5, **dadurch gekennzeichnet, dass** 0,1 bis 1000 ppm Indium, 0,1 bis 1000 ppm Bismuth und 0,1 bis 200 ppm Aluminium enthält.

12. Zinkpulver oder Zinklegierungspulver nach einem oder mehreren der Ansprüche 1 bis 11, **dadurch gekennzeichnet, dass** das Zinkpulver ein amalgamiertes Zinkpulver ist.

13. Zinkpulver oder Zinklegierungspulver nach Anspruch 12, **dadurch gekennzeichnet, dass** das Zinkpulver mit 0,1 bis 7 Gew.-% Hg amalgamiert ist.

14. Zinkpulver oder Zinklegierungspulver nach einem oder mehreren der Ansprüche 1 bis 13, **dadurch gekennzeichnet, dass** das Zinkpulver oder Zinklegierungspulver eine mittlere Schüttdichte von 1,8 bis 2,2 g/cm³ (LD-Pulver) aufweist.

15. Zinkpulver oder Zinklegierungspulver nach einem oder mehreren der Ansprüche 1 bis 13, **dadurch gekennzeichnet, dass** das Zinkpulver oder Zinklegierungspulver eine mittlere Schüttdichte von 2,5 bis 2,9 g/cm³ (MD-Pulver) aufweist.

16. Zinkpulver oder Zinklegierungspulver nach einem oder mehreren der Ansprüche 1 bis 13, **dadurch gekennzeichnet, dass** das Zinkpulver oder Zinklegierungspulver eine mittlere Schüttdichte von 3,0 bis 3,4 g/cm³ (HD-Pulver) aufweist.

17. Mischungen von Zinkpulver oder Zinklegierungspulver enthaltend herkömmliche Zinkpulver oder Zinklegierungspulver des Standes der Technik mit einer Schüttdichte von 2,8 bis 3,0 g/cm³ im Gemisch mit dem Pulver gemäß einem oder mehreren der Ansprüche 14 bis16.

18. Mischungen von Zinkpulver oder Zinklegierungspulver nach Anspruch 17, **dadurch gekennzeichnet, dass** die Mischung das Pulver gemäß Anspruch 14 enthält.

19. Mischungen von Zinkpulver oder Zinklegierungspulver nach Ansprüchen 17 oder 18, **dadurch gekennzeichnet, dass** die Mischung mindestens 5 Gew.-% Pulver gemäß den Ansprüchen 14 bis 16 enthält.

20. Mischungen von Zinkpulver oder Zinklegierungspulver nach einem oder mehreren der Ansprüche 17 bis 19, **dadurch gekennzeichnet, dass** die Mischung 10 bis 80 Gew.-% Pulver gemäß den Ansprüchen 14 bis 16 enthält.

21. Mischungen von Zinkpulver oder Zinklegierungspulver enthaltend das Pulver mit geringer Schüttdichte (LD-Pulver) gemäß Anspruch 14 und das Pulver höherer Schüttdichte (HD-Pulver) gemäß Anspruch 16.

22. Mischungen von Zinkpulver oder Zinklegierungspulver nach Anspruch 21, **dadurch gekennzeichnet, dass** die Mischung mindestens 5 Gew.-% Pulver mit geringer Schüttdichte (LD-Pulver) enthält.

23. Mischungen von Zinkpulver oder Zinklegierungspulver nach Anspruch 22, **dadurch gekennzeichnet, dass** die Mischung 10 bis 80 Gew.-% Pulver mit geringer Schüttdichte (LD-Pulver) enthält.

24. Mischungen von Zinkpulver oder Zinklegierungspulver enthaltend das Pulver mit mittlerer Schüttdichte (MD-Pulver) gemäß Anspruch 15 und das Pulver höherer Schüttdichte (HD-Pulver) gemäß Anspruch 16.

25. Mischungen von Zinkpulver oder Zinklegierungspulver nach Anspruch 24, **dadurch gekennzeichnet, dass** die Mischung mindestens 5 Gew.-% Pulver mit mittlerer Schüttdichte (MD-Pulver) enthält.

26. Mischungen von Zinkpulver oder Zinklegierungspulver nach Anspruch 25, **dadurch gekennzeichnet, dass** die Mischung 10 bis 80 Gew.-% Pulver mit mittlerer Schüttdichte (MD-Pulver) enthält.

27. Mischungen von Zinkpulver oder Zinklegierungspulver enthaltend das Pulver mit geringer Schüttdichte (LD-Pulver) gemäß Anspruch 14 und das Pulver mittlerer Schüttdichte (MD-Pulver) gemäß Anspruch 15.

28. Mischungen von Zinkpulver oder Zinklegierungspulver nach Anspruch 27, **dadurch gekennzeichnet, dass** die Mischung mindestens 5 Gew.-% Pulver mit geringer Schüttdichte (LD-Pulver) enthält.

29. Mischungen von Zinkpulver oder Zinklegierungspulver nach Anspruch 28, **dadurch gekennzeichnet, dass** die Mischung 10 bis 80 Gew.-% Pulver mit geringer Schüttdichte (LD-Pulver) enthält.

30. Alkalische Batterie enthaltend als Anode das Zinkpulver oder Zinklegierungspulver gemäß einem oder mehreren der Ansprüchen 1 bis 16.

31. Alkalische Batterie enthaltend als Anode Mischungen von Zinkpulver oder Zinklegierungspulver gemäß einem oder mehreren der Ansprüche 17 bis 20.

32. Alkalische Batterie enthaltend als Anode Mischungen von Zinkpulver oder Zinklegierungspulver gemäß einem oder mehreren der Ansprüche 21 bis 23.

33. Alkalische Batterie enthaltend als Anode Mischungen von Zinkpulver oder Zinklegierungspulver gemäß einem oder mehreren der Ansprüche 24 bis 26.

34. Alkalische Batterie enthaltend als Anode Mischungen von Zinkpulver oder Zinklegierungspulver gemäß einem oder mehreren der Ansprüche 27 bis 29.

35. Alkalische Batterie enthaltend als Anode Mischungen von Zinkpulver oder Zinklegierungspulver gemäß einem oder mehreren der Ansprüche 21 bis 23.
